# EUROPEAN PATENT APPLICATION

(11) **EP 1 655 907 A1**
(43) Date of publication of application: **10.05.2006**
(21) Application number: 05024121.5
(22) Date of filing: 04.11.2005
(51) Int. Cl.: H04L 12/56

(54) **Method and apparatus for scheduling uplink data transmission for a mobile station in soft handover region in a mobile communication system**

(30) Priority: 04.11.2004 KR 2004089503; 14.01.2005 KR 2005003914
(71) Applicant: Samsung Electronics Co., Ltd., Suwon-si, Gyeonggi-Do (KR)
(72) Inventor: Kwak, Yong-Jun, Yeongtong-gu Suwon-si Gyeonggi-do (KR); Heo, Youn-Hyoung, Yeongtong-gu Suwon-si Gyeonggi-do (KR); Lee, Ju-Ho, Yeongtong-gu Suwon-si Gyeonggi-do (KR); Cho, Joon-Young, Yeongtong-gu Suwon-si Gyeonggi-do (KR); Kim, Young-Bum, Yeongtong-gu Suwon-si Gyeonggi-do (KR)
(74) Representative: Grünecker, Kinkeldey, Stockmair & Schwanhäusser Anwaltssozietät

(57) **Abstract**

A method and apparatus for scheduling uplink data transmission for a UE in a mobile communication system supporting an uplink packet data service are provided. A serving Node B and at least one non-serving Node B are included in an active set of a UE located in a soft handover region. The UE receives a dedicated scheduling grant from the serving Node B by dedicated scheduling and a common scheduling grant from the at least one non-serving Node B, controls an uplink data rate not to exceed a previous uplink data rate during a predetermined validity duration, if the common scheduling grant indicates a rate-down, and transmits uplink data at the controlled uplink data rate.

## Description

### BACKGROUND OF THE INVENTION

### Field of the Invention

The present invention relates generally to asynchronous Wideband Code Division Multiple Access (WCDMA) communications. In particular, the present invention relates to a method and apparatus for efficiently scheduling uplink packet transmission for a mobile station in a soft handover region.

### Description of the Related Art

A 3^{rd} generation mobile communication system using WCDMA based on the European Global System for Mobile communications (GSM) system, Universal Mobile Telecommunication Service (UMTS) provides mobile subscribers or computer users with a uniform service of transmitting packet-based text, digitized voice, and video and multimedia data at or above 2Mbps irrespective of their locations around the world. With the introduction of the concept of virtual access, the UMTS system allows access to any end point within a network all the time. The virtual access refers to packet-switched access using a packet protocol like Internet Protocol (IP).

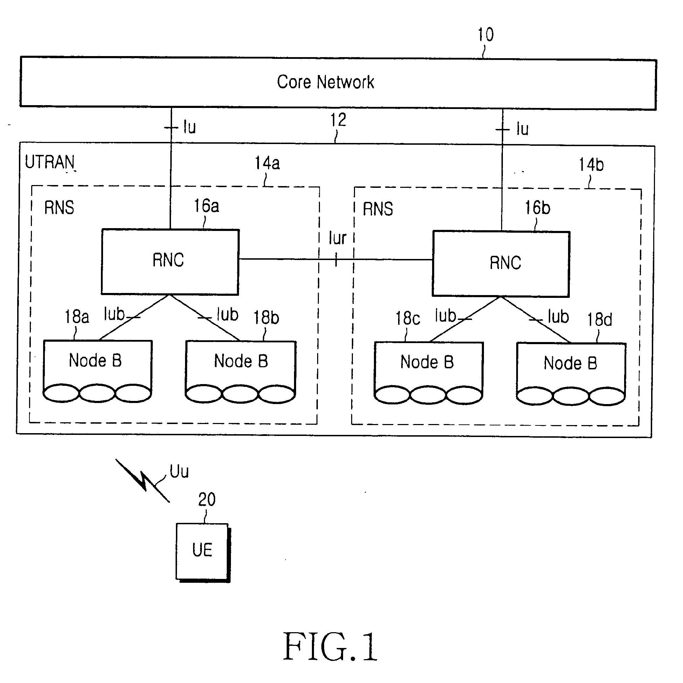

FIG. 1 illustrates the configuration of the UMTS Terrestrial Radio Access Network (UTRAN) of a conventional UMTS system.

Referring to FIG. 1, a UTRAN 12 includes Radio Network Controllers (RNCs) 16a and 16b and Node Bs 18a to 18d and connects a User Equipment (UE) 20 to a Core Network (CN) 10. A plurality of cells may underlie the Node Bs 18a to 18d. Each RNC 16a or 16b controls its underlying Node Bs and each Node B controls its underlying cells. An RNC, and Node Bs and cells under the control of the RNC collectively form a Radio Network Subsystem (RNS) 14a or 14b.

The RNCs 16a and 16b each allocate or manage radio resources to the Node Bs 18a to 18d under their control and the Node Bs 18a to 18d function to actually provide the radio resources. The radio resources are configured on a cell basis and the radio resources provided by the Node Bs 18a to 18d refer to radio resources of the cells that they manage. The UE establishes a radio channel using radio resources provided by a particular cell under a particular Node B, for communications. From the UE's point of view, a distinction between the Node Bs 18a to 18d and their controlled cells is meaningless and the UE 20 deals only with a physical layer configured on a cell basis. Therefore, the terms "Node B" and "cell" are interchangeably used herein.

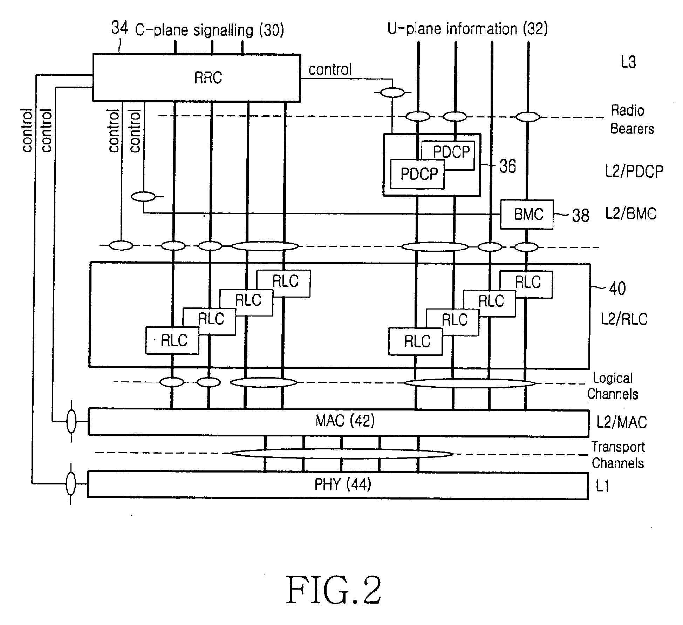

A Uu interface is defined between a UE and an RNC. The hierarchical protocol architecture of the Uu interface is illustrated in detail in FIG. 2. This interface is divided into a control plane (C-plane) 30 for exchanging control signals between the UE and the RNC and a user plane (U-plane) 32 for transmitting actual data.

Referring to FIG. 2, a Radio Resource Control (RRC) layer 32, a Radio Link Control (RLC) layer 40, a Medium Access Control (MAC) layer 42, and a physical (PHY) layer 44 are defined on the C-plane 30. A Packet Data Control Protocol (PDCP) layer 36, a Broadcast/Multicast Control (BMC) layer 38, the RLC layer 40, the MAC layer 42, and the PHY layer 44 are defined on the U-plane 32. The PHY layer 44 resides in each cell and the MAC layer 42 through the RRC layer 34 are configured usually in each RNC.

The PHY layer 44 provides an information delivery service by a radio transfer technology, corresponding to Layer 1 (L1) in an Open System Interconnection (OSI) model. The PHY layer 44 is connected to the MAC layer 42 via transport channels. The mapping relationship between the transport channels and physical channels is determined according to how data is processed in the PHY layer 44.

The MAC layer 42 is connected to the RLC layer 40 via logical channels. The MAC layer 42 delivers data received from the RLC layer 40 on the logical channels to the PHY layer 44 on appropriate transport channels, and delivers data received from the PHY layer 44 on the transport channels to the RLC layer 40 on appropriate logical channels. The MAC layer 42 inserts additional information or interprets inserted data in data received on the logical channels and controls random access. A U-plane-related part is called MAC-data (MAC-d) and a C-plane-related part is called MAC-control (MAC-c) in the MAC layer 42.

The RLC layer 40 controls the establishment and release of the logical channels. The RLC layer 40 operates in one of an Acknowledged Mode (AM), an Unacknowledged Mode (UM) and a Transparent Mode (TM) and provides different functionalities in those modes. Typically, the RLC layer 40 segments or concatenates Service Data Units (SDUs) received form an upper layer to an appropriate size and correct errors.

The PDCP layer 36 resides above the RLC layer 40 in the U-plane 32. The PDCP layer 36 is responsible for compression and decompression of the header of data carried in the form of an IP packet and data delivery with integrity in the case where a serving RNC is changed due to the UE's mobility.

The characteristics of the transport channels that connect the PHY layer 44 to the upper layers depend on Transport Format (TF) that defines PHY layer processes including convolutional channel encoding, interleaving, and service-specific rate matching.

Particularly, the UMTS system uses an Enhanced Uplink Dedicated CHannel (E-DCH) with the aim to further improve packet transmission performance on the uplink from UEs to a Node B. To support more stable high-speed data transmission, the E-DCH utilizes Hybrid Automatic Retransmission request (HARQ) and Node B-controlled scheduling.

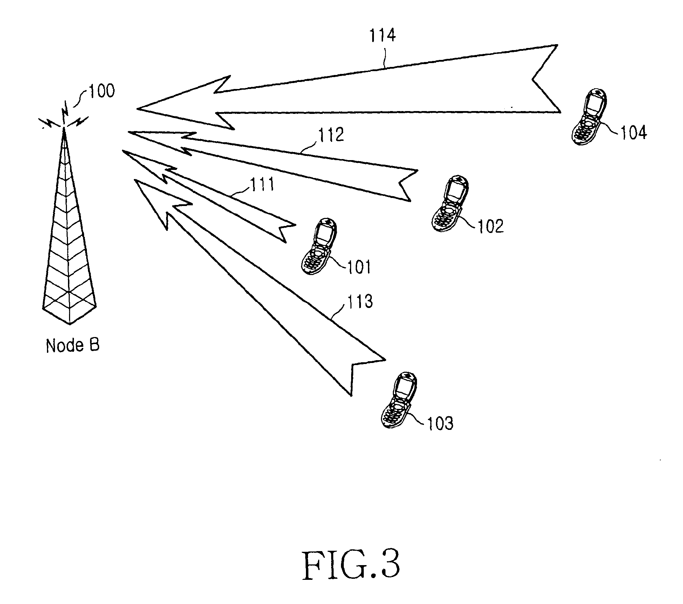

FIG. 3 conceptually illustrates typical data transmission on the E-DCH via radio links. Reference numeral 100 denotes a Node B supporting the E-DCHs 111 to 114 and reference numerals 101 to 104 denote UEs that transmit the E-DCHs 111 to 114.

Referring to FIG. 3, the Node B 100 evaluates the channel statuses of the UEs 101 to 104 and schedules their uplink data transmissions based on the channel statues. The scheduling is performed such that a noise rise measurement does not exceed a target noise rise in the Node B 100 in order to increase total system performance. Therefore, the Node B 100 allocates a low data rate to a remote UE 104 and a high data rate to a nearby UE 101.

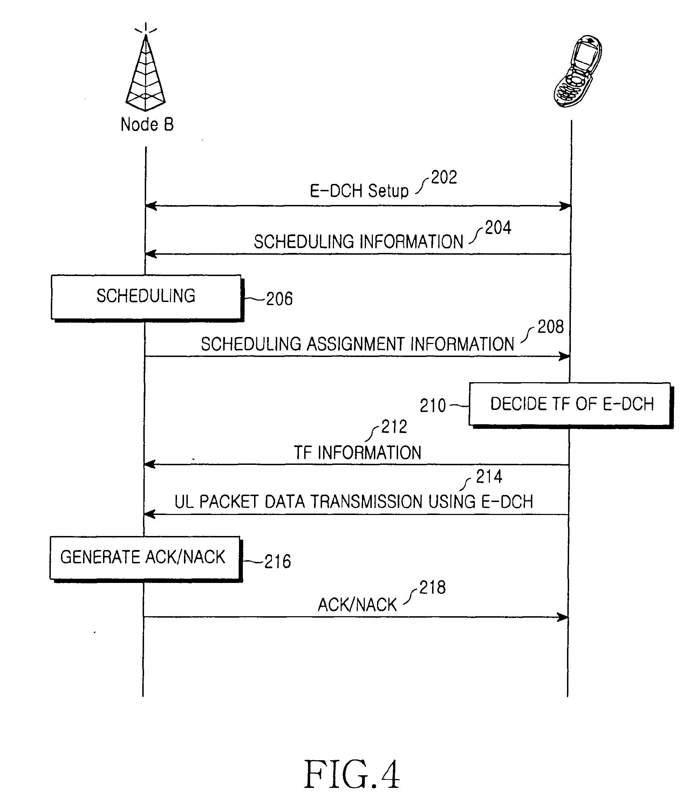

FIG. 4 is a diagram illustrating a typical signal flow for message transmission on the E-DCH.

Referring to FIG. 4, a Node B and a UE establish an E-DCH in step 202. Step 202 involves message transmission on dedicated transport channels. The UE transmits scheduling information to the Node B in step 204. The scheduling information may contain uplink channel status information being the transmit power and power margin of the UE, and the amount of buffered data to be transmitted to the Node B.

In step 206, the Node B monitors scheduling information from a plurality of UEs to schedule uplink data transmissions for the individual UEs. The Node B decides to approve an uplink packet transmission from the UE and transmits scheduling assignment information to the UE in step 208. The scheduling assignment information is an absolute grant (AG) indicating an allowed maximum data rate or a relative grant (RG) indicating increase/decrease/no change in the allowed maximum data rate with respective to the previous allowed maximum data rate. The AG or RG is transmitted by dedicated signaling for each UE or by common signaling for one or more UE groups or all UEs within one cell.

In step 210, the UE determines the TF of the E-DCH within the allowed maximum data rate based on the scheduling assignment information. The UE then transmits to the Node B TF information, and uplink packet on the E-DCH at the same time in steps 212 and 214. The Node B determines whether the TFRI and the uplink packet data have errors in step 216. In the presence of errors in either of the TFRI and the uplink packet data, the Node B transmits an ACKnowledgement (ACK) signal to the UE, whereas in the absence of errors in both, the Node B transmits Non-ACKnowledgement (NACK) signal to the UE in step 218.

In the former case, the packet data transmission is completed and the UE transmits new packet data to the Node B on the E-DCH. On the other hand, in the latter case, the UE retransmits the same packet data to the Node B on the E-DCH.

The E-DCH has the basic features of a dedicated channel because it was developed to enhance the packet transmission performance of a transport channel. One of the features is to support soft handover. That is, a UE in a soft handover region can receive downlink information from all of Node Bs in an active set. Hence, the UE receives scheduling assignment information from the active set Node Bs to transmit the E-DCH. Since the scheduling assignment information from each of the Node Bs may be different, the UE does not need to decide whether to transmit the E-DCH using the different scheduling assignment information.

In the conventional E-DCH-supporting communication system, all Node Bs in an active set transmit scheduling assignment information to a UE in a soft handover region, for uplink data transmission scheduling, as described above. Therefore, overhead is created in downlink channel code resources or transmit power and the UE, receiving a plurality of pieces of scheduling assignment information, has difficulty in deciding the E-DCH transmission.

### SUMMARY OF THE INVENTION

The present invention is to address at least the above problems and/or disadvantages and to provide at least the advantages below. Accordingly, an object of the present invention is to provide a method and apparatus for efficiently scheduling E-DCH transmission for a UE in a soft handover region in a mobile communication system.

The present invention is to provide a method and apparatus for scheduling uplink data transmission for a UE in a soft handover region, taking into account non-serving Node Bs in an active set.

The present invention is to provide a method and apparatus for determining a data rate for uplink packet transmission using scheduling assignment information received from Node Bs in an active set in a UE located in a soft handover region.

The present invention is to provide a method and apparatus for receiving from an RNC information indicating a validity duration in which scheduling assignment information from a non-serving Node B is valid in a UE located in a soft handover region.

The present invention is to provide a method and apparatus for receiving from an RNC information indicating a validity duration in which scheduling assignment information from a non-serving Node B is valid in a serving Node B having a soft handover region under its coverage.

The present invention may be achieved by exemplary implementations of a method and apparatus for scheduling uplink data transmission for a UE in a mobile communication system supporting an uplink packet data.

According to one exemplary implementation of the present invention, in a method of scheduling uplink data transmission in a UE in a mobile communication system supporting an uplink packet data service, the UE receives, during communicating with one serving Node B and at least one non-serving Node B at a soft handover, a dedicated scheduling grant from the serving Node B by dedicated scheduling and a common scheduling grant from the at least one non-serving Node B. If the common scheduling grant indicates a rate-down, the UE controls an uplink data rate not to exceed a previous uplink data rate during a predetermined validity duration and transmits uplink data at the controlled uplink data rate.

According to another exemplary implementation of the present invention, in a method of scheduling uplink data transmission for a UE in a Node B in a mobile communication system supporting an uplink packet data service, the Node B transmits a dedicated scheduling grant to a UE located in a soft handover region by dedicated scheduling and receives uplink data from the UE, after transmitting the dedicated scheduling grant. If the data rate of the received uplink data is lower than a data rate indicated by the dedicated scheduling grant, the Node B controls an uplink data rate not to exceed a previous uplink data rate during a predetermined validity duration, and transmits a dedicated scheduling grant indicating the controlled uplink data rate to the UE.

According to a further exemplary implementation of the present invention, in an apparatus for scheduling uplink data transmission for a UE in a mobile communication system supporting an uplink packet data service, there are one serving Node B and at least one non-serving Node B associated with a soft handover region. A UE located in the soft handover region receives a dedicated scheduling grant from the serving Node B by dedicated scheduling and a common scheduling grant from the at least one non-serving Node B, controls an uplink data rate not to exceed a previous uplink data rate during a predetermined validity duration, if the common scheduling grant indicates a rate-down, and transmits uplink data at the controlled uplink data rate.

### BRIEF DESCRIPTION OF THE DRAWINGS

The features and advantages of the exemplary implementations of the present invention will become more apparent from the following detailed description when taken in conjunction with the accompanying drawings in which like reference numerals will be understood to refer to like parts, components and structures, where:
FIG. 1 illustrates the configuration of a UTRAN in a typical UMTS system;
FIG. 2 illustrates the hierarchical architecture of an interface defined between a UE and an RNC;
FIG. 3 illustrates a conventional E-DCH transmission via a radio link;
FIG. 4 is a diagram illustrating a conventional signal flow for message transmission/reception on an E-DCH;
FIG. 5 illustrates scheduling for UEs located in a soft handover region according to an exemplary implementation of an embodiment information;
FIG. 6 is a diagram illustrating signaling for transmission/reception of validity duration information between an RNC and a UE according to an exemplary implementation of an embodiment of the present invention;
FIG. 7 is a flowchart illustrating an operation for transmitting uplink data based on validity duration information in the UE according to an exemplary implementation of an embodiment of the present invention;
FIG. 8 is a flowchart illustrating an operation for transmitting uplink data based on validity duration information in the UE according to another exemplary implementation of an embodiment of the present invention;
FIG. 9 is a diagram illustrating signaling for transmission/reception of validity duration information between an RNC and a Node B according to a third exemplary embodiment of the present invention;
FIG. 10 is a flowchart illustrating a scheduling operation in the Node B which has received validity duration information according to the third exemplary embodiment of the present invention; and
FIG. 11 is a diagram illustrating a signal flow for determining an overload bit transmission duration and a validity duration according to the TTIs of UEs in a soft handover region, and a related system operation according to an exemplary implementation of an embodiment of the present invention.

### DETAILED DESCRIPTION OF EXEMPLARY EMBODIMENTS

Exemplary implementations of certain embodiments of the present invention will be described herein below with reference to the accompanying drawings. In the following description, well-known functions or constructions are not described in detail for conciseness.

An aspect of the present invention is to schedule uplink data transmission for a UE located in a soft handover region, with the aim to provide an enhanced uplink packet data service in a mobile communication system.

A UE located in a soft handover region, a primary scheduling Node B (or a serving Node B) for scheduling uplink packet data transmissions for the UE and other UEs, and non-primary scheduling Node Bs (or non-serving Node Bs) other than the serving Node B included in an active set are involved in the uplink data transmission scheduling according to an aspect of the present invention. The UE transmits uplink packet data in the soft handover region based on scheduling assignment information received from the primary and non-serving Node Bs.

As described above, a UE located in a soft handover region receives scheduling assignment information from a serving Node B and one or more non-serving Node Bs by scheduling-associated signaling. The primary and non-serving Node Bs perform scheduling for the UE in different manners. Specifically, the serving Node B transmits scheduling assignment information to the UE on a dedicated channel (i.e. dedicated signaling), whereas the non-serving Node Bs transmit scheduling assignment information to the UE on a common channel (i.e. common signaling). The scheduling by dedicated signaling and common signaling will be detailed later.

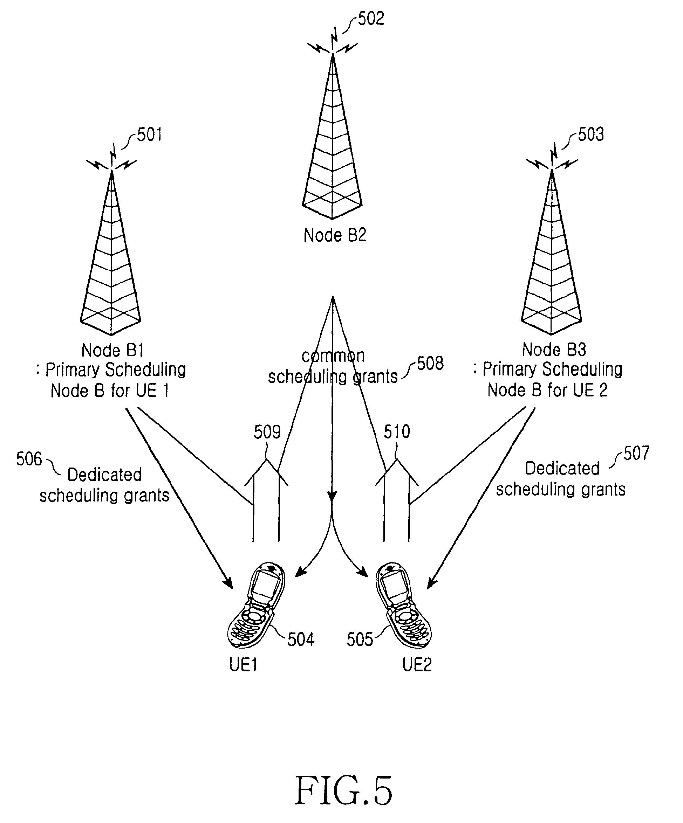

FIG. 5 illustrates scheduling for UEs located in a soft handover region according to an exemplary implementation of an embodiment information.

Referring to FIG. 5, first and second UEs 504 and 505 (UE1 and UE2) are located in a soft handover region. UE1 manages an active set including first and second Node Bs 501 and 502 (Node B 1 and Node B2). Node B1 is a serving Node B for UE1. UE2 manages an active set including the second and third Node Bs 502 and 503 (Node B2 and Node B3). Node B3 is a serving Node B for UE2.

Node B1, Node B2 and Node B3 schedule uplink data transmission for UE1 and UE2 according to the statuses of the UEs. For this purpose, UE1 and UE2 transmit their UE status information on the uplink. The UE status information is delivered on an Enhanced-Dedicated Physical Data CHannel (E-DPDCH) on which the E-DCH is mapped irrespective of the presence or absence of uplink packet data, and on an Enhanced-Dedicated Physical Control CHannel (E-DPCCH) which carries control information of the E-DCH in the presence of uplink packet data.

The UE status information of the E-DPDCH is buffer occupancy (BO) information and transmits power status (TPS) information. The BO and TPS information can be transmitted to a Node B in a MAC-e Protocol Unit (PDU) of the E-DCH, that is, by MAC-e signaling.

The UE status information delivered on the E-DPCCH in the presence of uplink packet data is a rate request. The E-DPCCH further carries the Transport Format Indicator (TFI), retransmission sequence number, Quality of Service (QoS), and power boost information of E-DPDCH data.

The rate request is represented in one or more bits. The UE requests a data rate for the next transmission data to the serving Node B by the rate request. For example, given one bit for the rate request, if the rate request bit is "1", it indicates rate-up. If the rate request bit is "0", it indicates no rate-up. In the former case, the UE requests a higher data rate for the next E-DCH transmission to a Node B scheduler of the serving Node B. In the latter case, the UE is satisfied with the current data rate.

Node B1, Node B2 and Node B3 determine whether to grant uplink data transmission in the next Transmission Time Interval (TTI) and, in addition, allowed maximum data rates based on the UE status information received from UE1 and UE2 and available radio resources. Node B1 and Node B3 then notify UE1 and UE2 of the allowed maximum data rates by dedicated signaling, whereas Node B2 notifies UE1 and UE2 of the scheduling result by common scheduling. If the uplink resource status of cells under the coverage of Node B2 is bad, Node B notifies UE1 and UE2 of the overload of the uplink resources. In other words, Node B2 transmits a rate-down command to UE 1 and UE2 for which Node B2 is set as a non-serving Node B.

Node B 1 transmits a dedicated scheduling grant 506 indicating an allowed maximum data rate to UE1, and Node B3 also transmits a dedicated scheduling grant 507 indicating an allowed maximum data rate to UE2. On the other hand, Node B2 transmits a common scheduling grant 508 to UE1 and UE2 for which Node B2 is a non-serving Node B. The common scheduling grant 508 indicates a common rate change to both UE1 and UE2. Therefore, UE1 and UE2 each determine an E-DCH TF based on the dedicated scheduling grant 506 or 507 and the common scheduling grant 508, and transmits uplink data and the TF information of the uplink data on the E-DPDCH and the E-DPCCH.

In this way, the UE located in a soft handover region transmits its UE status information to the Node Bs of its active set on the E-DPCCH or by MAC-e signaling. The Node Bs then schedule uplink data transmission for the UE based on the UE status information. The UE determines the TF of the E-DCH based on both a dedicated scheduling grant from the serving Node B and a common scheduling grant from the non-serving Node B.

A description that follows sets forth exemplary implementations of certain exemplary embodiments of the present invention in relation to processing of a common scheduling grant when a UE receives the common scheduling grant from at least one non-serving Node B as well as a dedicated scheduling grant from a serving Node B.

### First Exemplary Embodiment

A UE located in a soft handover region receives a dedicated scheduling grant from a serving Node B and an overload bit as a common scheduling grant from a non-serving Node B. If the overload bit is "0", the UE determines an uplink data rate based on the dedicated scheduling grant. If the overload bit is "1", the UE does not increase the uplink data rate during a predetermined validity duration.

That is, the UE, receiving the overload bit from the non-serving Node B, operates considering the overload bit rather than based on the dedicated scheduling grant from the serving Node B. More specifically, the UE does not set a rate request bit to "UP" to prevent the uplink rate of the next TTI from exceeding that of the current TTI. A validity duration for which the rate request bit is supposed not to be set to "UP" is a fixed value or notified by an RNC.

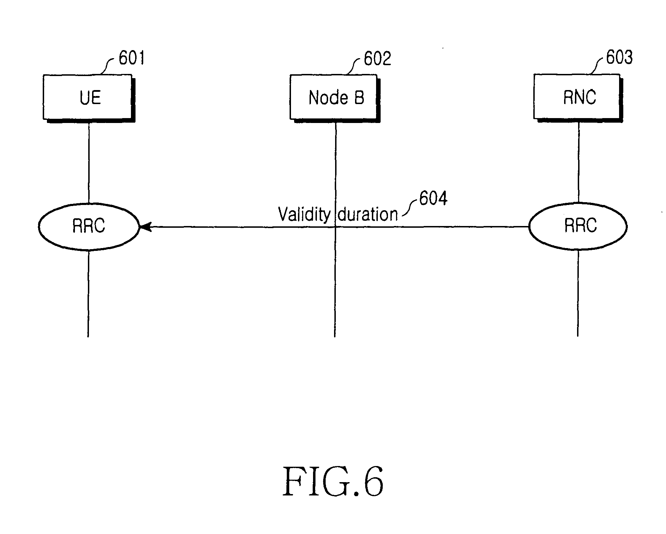

FIG. 6 is a diagram illustrating signaling for transmission/reception of validity duration information between an RNC and a UE according to an exemplary embodiment of the present invention.

Referring to FIG. 6, an RNC 603 transmits to a UE 601 through a Node B 602 validity duration information 604 indicating the validity duration of an overload bit set by a non-primary Node B. That is, the RNC 603 transmits the validity duration information 604 to the UE 601 receiving an overload bit of 1 from the non-serving Node B in its active set to permit a limited operation for the UE 601 during a validity duration.

The validity duration information 604 is delivered to the UE 601 by Radio Resource Control (RRC) signaling. The UE 601 is located in a soft handover region and acquires the validity duration of the overload bit set to 1 from the validity duration information 604. The validity duration information 604 may be different for each UE or from each non-serving Node B. According to an exemplary implementation of the present invention, the validity duration information 604 is determined according to the QoS of uplink data, a current data rate, or UE status information.

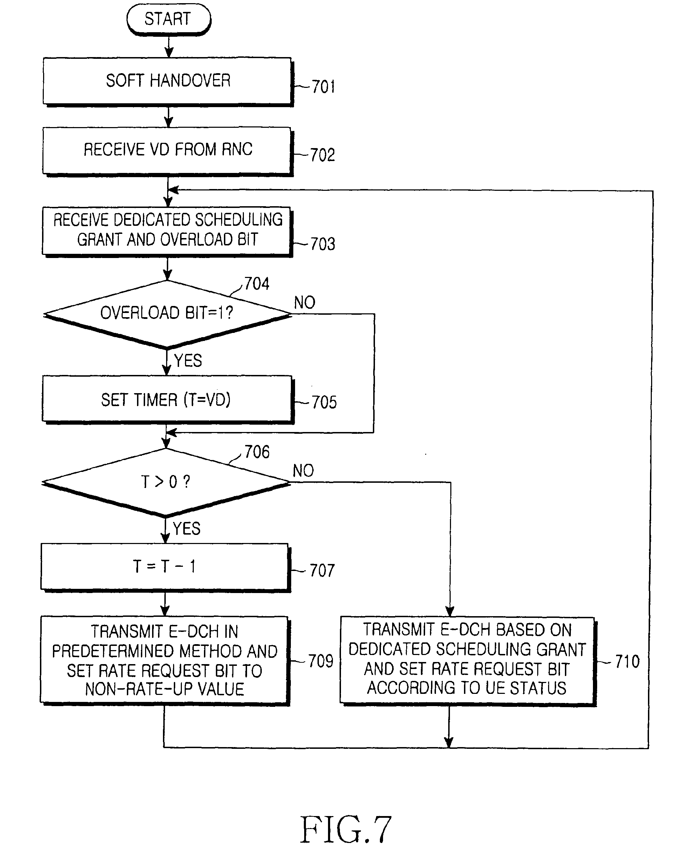

As described above, for an overload bit set to 1, the UE 601 limits its operation rather than transmits uplink data at an optimum rate. The limited operation will be described with reference to FIG. 7.

FIG. 7 is a flowchart illustrating an operation for determining an uplink data rate based on validity duration information in the UE according to an exemplary implementation of an embodiment of the present invention.

Referring to FIG 7, the UE is located in a soft handover region in step 701 and receives validity duration information associated with an overload bit set by a non-primary signaling Node B from the RNC by RRC signaling in step 702.According to another exemplary implementation of the present invention, the UE may read predetermined validity duration information from an internal memory. In step 703, the UE receives a dedicated scheduling grant from a serving Node B and an overload bit as a common scheduling grant from a non-serving Node B.

The UE determines whether the overload bit is set to 1 in step 704. If the overload bit is 1, the UE sets a timer T to a validity duration VD according to the validity duration information and activates the timer T in step 705 and proceeds to step 706. The validity duration is a multiple of an E-DCH TTI. During the validity duration, the uplink resources of the non-serving Node B are rendered sufficiently available. On the other hand, if the overload bit is not 1, which implies that the non-serving Node B is not overloaded, the UE jumps to step 706.

In step 706, the UE determines whether the timer value T is larger than 0. If T is larger than 0, the UE decreases T by 1 in step 707 and transmits uplink data on the E-DCH in a predetermined method in step 709. More specifically, the data rate of the E-DCH is set to be lower than the E-DCH rate of the previous TTI by one level or controlled not to occupy more of the uplink resources of the non-serving Node B. Because the UE knows that the uplink resources of the non-serving Node B is in an overload state, it sets the E-DCH rate not to exceed the previous E-DCH rate in step 709. The previous E-DCH rate refers to a data rate at the time when the overload bit is received.

Also in step 709, the UE transmits the TF information of uplink data on the E-DPCCH designed to carry E-DCH-associated control information. Here, the UE unconditionally sets a rate request bit to a value other than "UP" on the E-DPCCH, neglecting other status information. Setting the rate request bit to a non-"UP" value takes place in all UEs, or according to the priority levels of the UEs, or according to setting by the RNC. The validity duration can be used to limit MAC-e signaling. Although the MAC-e signaling enables a serving Node B to allocate more resources to a particular UE, other UEs are excluded from as much resources, thereby decreasing system performance. Hence, the MAC-e signaling can be limited to the UE during the validity duration.

On the contrary, if T is equal to 0 in step 706, the UE transmits uplink data on the E-DCH according to the dedicated scheduling grant in step 710. The UE uses only the dedicated scheduling grant, neglecting the overload bit, in determining an E-DCH rate. The UE also sets the rate request bit of the E-DPCCH to "UP" or a non-"UP" value according to its status.

In accordance with the exemplary embodiment of the present invention, a non-serving Node B in an active set transmits an overload bit as a common scheduling grant to a UE located in a soft handover region. A serving Node B allocates uplink resources to the UE by dedicated scheduling signaling. The UE then selects an E-DCH rate considering the uplink resources of the non-serving Node B according to validity duration information associated with the overload bit and transmits uplink data at the selected E-DCH rate.

### Second Exemplary Embodiment

A UE located in a soft handover region receives an overload bit as a common scheduling grant from a non-serving Node B and a dedicated scheduling grant from a serving Node B, for allocation of uplink resources. If the overload bit is not set to 1, the UE allocates uplink resources according to whether current uplink data is to be initially transmitted or retransmitted. If the non-serving Node B is overloaded and the uplink data is to be initially transmitted, the UE sets a rate request bit to a non-"UP" value, neglecting the dedicated scheduling grant.

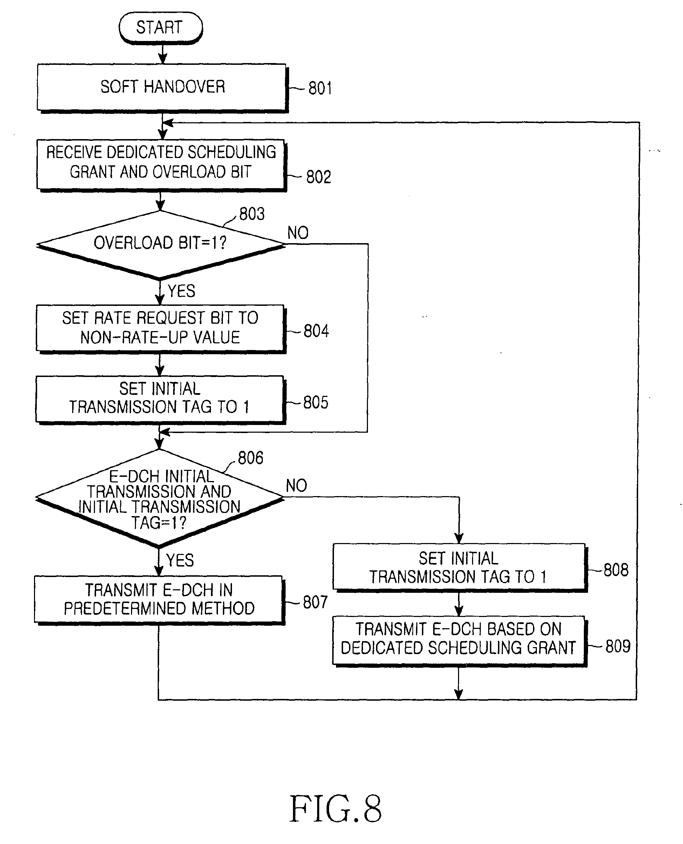

FIG. 8 is a flowchart illustrating an operation for transmitting uplink data based on validity duration information in the UE according to another exemplary embodiment of the present invention. The UE considers whether uplink data is to be initially transmitted or retransmitted in determining the data rate of the uplink data.

Referring to FIG. 8, the UE is located in a soft handover region in step 801. In step 802, the UE receives a dedicated scheduling grant from a serving Node B and an overload bit as a common scheduling grant from a non-serving Node B. The primary and non-serving Node Bs belong to an active set of the UE.

In step 803, the UE determine whether the overload bit is 1, indicating the overload of the uplink resources of the non-serving Node B. If the overload bit is 1, the UE does not set a rate request bit for the next E-DCH transmission to "UP" in the E-DPCCH in step 804. The limited allocation of uplink resources to the UE in scheduling of the next E-DCH transmission of the serving Node B relieves the overload of the uplink resources in the non-serving Node B. On the other hand, if the overload bit is not 1 in step 803, the UE jumps to step 806. In step 805, the UE sets an initial transmission tag to 1 to await initial transmission.

In step 806, in the case of initially transmitting the current uplink data, the UE determines whether the initial transmission tag is 1. If the condition of step 806 is satisfied, the UE transmits the uplink data on the E-DCH in a predetermined method, neglecting the dedicated scheduling grant in step 807. The predetermined method can be, for example, to decrease the uplink data rate by one level from the previous data rate, or maintain the previous data rate so that the uplink resources of the non-serving Node B are no more used.

On the contrary, if the condition of step 806 is not satisfied, the UE sets the initial transmission tag to 0 in step 808 and transmits the uplink data on the E-DCH based on the dedicated scheduling grant, neglecting the overload bit in step 809. That is, the E-DCH data rate is determined according to the dedicated scheduling grant. Also, the rate request bit of the E-DPCCH can set according to the status of the UE.

### Third Exemplary Embodiment

A UE is located in a soft handover region. The UE receives an overload bit as a common scheduling grant from a non-serving Node B in an active set and a dedicated scheduling grant from a serving Node B in the active set.

If the overload bit is 0, the UE allocates uplink resources based on the dedicated scheduling grant. If the overload bit is 1, the UE operates in the following limited manner.

For the overload bit being 1 indicating the overload of the non-serving Node B, the UE sets a rate request bit to a non-"UP" value and operates for the earliest coming initial transmission in a predetermined method. For example, the UE uses a data rate one level lower than the dedicated scheduling grant allows, or one level lower than the previous data rate.

In accordance with the third exemplary embodiment of the present invention, an RNC notifies the serving Node B of the validity duration of the overload bit and the serving Node B controls the UE to use a data rate one level lower than the dedicated scheduling grant allows during the validity duration. Thus, uplink resources which are relatively small considering the status of the UE are allocated to the UE during the validity duration.

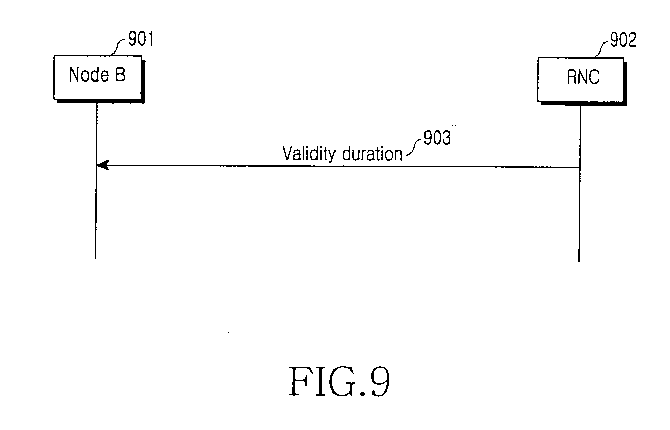

FIG. 9 is a diagram illustrating signaling for transmission/reception of validity duration information between the RNC and the serving Node B according to an exemplary implementation of the third exemplary embodiment of the present invention.

Referring to FIG. 9, an RNC 902 signals validity duration information 903 indicating the validity duration of an overload bit set by a non-serving Node B to a serving Node B 901 The validity duration information 903 is delivered by Node B Application Protocol (NBAP) signaling. If the RNC 902 is not a drift RNC that actually controls the serving Node B 901, the validity duration information 903 is delivered by RNSAP signaling and NBAP signaling.

The validity duration information may be different for each UE or from each non-serving Node B. According to another exemplary implementation of an embodiment of the present invention, the validity duration information 903 is determined according to QoS, the current data rate, and the UE status information of a UE. When the UE includes the non-serving Node B in its active set, or when the validity duration is changed, the validity duration information 903 can be transmitted.

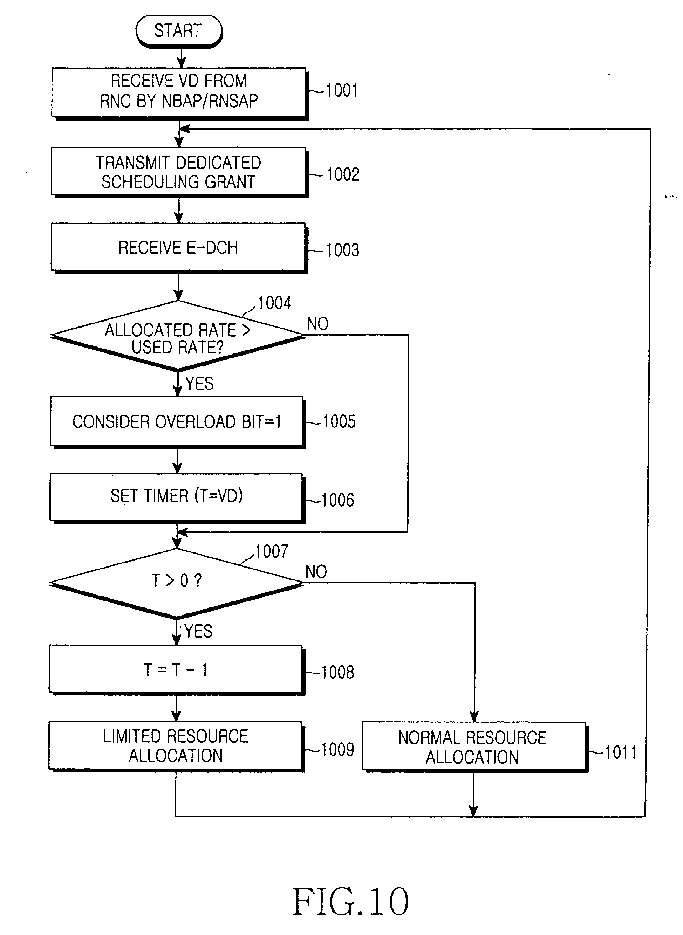

FIG. 10 is a flowchart illustrating a scheduling operation in the serving Node B which has received the validity duration information according to the third exemplary embodiment of the present invention.

Referring to FIG. 10, the serving Node B receives from the RNC validity duration information associated with an overload bit for a UE scheduled by the serving Node B and located in a soft handover region in step 1001. In another case, the serving Node B reads predetermined validity duration information from its internal memory. The serving Node B transmits a dedicated scheduling grant to the UE in step 1002 and receives uplink data on the E-DCH from the UE in step 1003.

The serving Node B compares a data rate allocated by the dedicated scheduling grant with the data rate of the received uplink data in step 1004. If the used data rate is lower than the allocated data rate, the serving Node B considers that the UE received an overload bit set to 1 from the non-serving Node B adjacent to the serving Node B in step 1005.

The serving Node B sets a timer T to a validity duration VD set in the validity duration information and activates the timer in step 1006. In step 1007, the serving Node B determines whether the timer value T is larger than 0. If T is larger than 0, the serving Node B decreases T by 1 in step 1008 and allocates a small amount of uplink resources to the UE relative to other UEs, taking into account the overload of the non-serving Node B in step 1009. If T is equal to 0, the serving Node B allocates optimum uplink resources to the UE, that is, ensures as high a data rate as possible for the UE in step 1011.

Now a description will be made of scheduling in the case where a plurality of UEs in a soft handover region use different TTIs.

It is effective to set as an equal validity duration as possible for a plurality of UEs which receive an overload bit. For the case where UEs using a 2-ms TTI and UEs using a 10-ms TTI co-exist in a soft handover region, there is a need for setting the same validity duration for the UEs.

If all UEs located in the soft handover region use a 2-ms TTI, the transmission duration of the overload bit is set on a 2-ms basis and the validity duration is also set on a 2-ms basis. On the other hand, if some of the UEs in the soft handover region use a 2-ms TTI and other UEs use a 10-ms TTI, they receive a common overload bit from a Node B serving as a non-serving Node B in the soft handover region. Since the overload bit can be transmitted to the UEs using different TTIs at different times, the UEs must set a new overload bit reception timing. The validity duration of the overload bit must also be newly set.

In an exemplary implementation of an embodiment of the present invention, the overload bit is transmitted for 10ms to both the UEs using a 2-ms TTI and the UEs using a 10-ms TTI so that the overload bit transmission duration can be applied commonly to them. Thus, the validity duration is set to be a multiple of 10ms.

The overload bit transmission duration and the validity duration can be set for UEs in a soft handover region in many ways.

According to an exemplary implementation, the overload bit transmission duration is set to 10ms all the time, with no regard to different 2-ms and 10-ms TTIs. Thus, the validity duration is a multiple of 10ms. Even though all UEs in the soft handover region use only the 2-ms TTI, the overload bit is transmitted to them for 10ms.

According to another exemplary implementation, the RNC determines the TTIs of the individual UEs in the soft handover region and notifies Node Bs associated with the UEs and the soft handover region of an overload bit transmission duration.

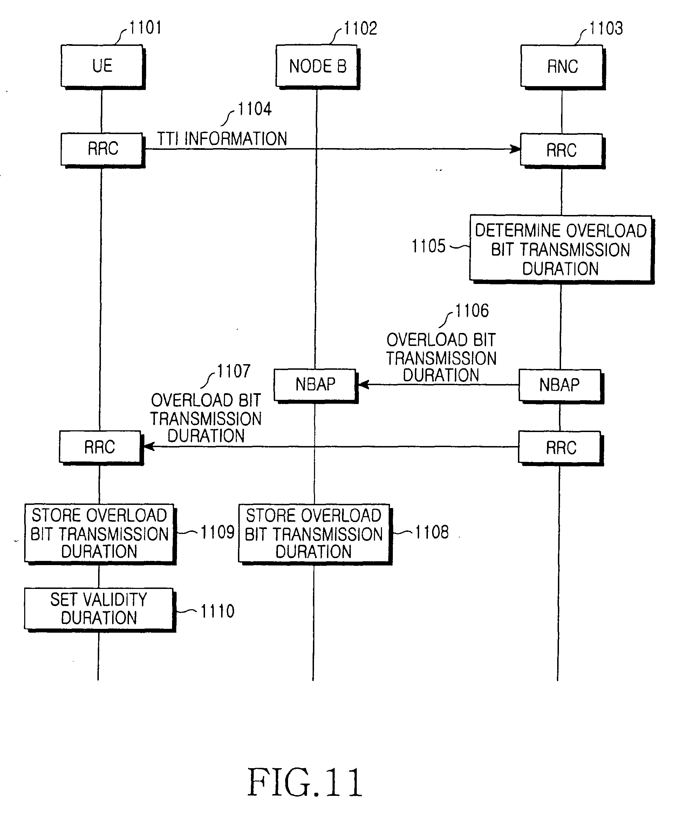

FIG. 11 is a diagram illustrating a signal flow for transmitting validity duration information to UEs using different TTIs in a soft handover region according to an exemplary implementation of an embodiment of the present invention. While one Node B 1102 associated with the soft handover region and one UE 1101 located in the soft handover region are shown, the same thing is applied to other Node Bs and UEs which are not shown here. The UE 1101 and the Node B 1102 receive information about an overload bit transmission duration from an RNC 1103 by RRC signaling and NBAP signaling, transmit and receive an overload bit based on the overload bit transmission duration, and change the validity duration of the overload bit.

Referring to FIG. 11, the UE 1101 reports its TTI information to the RNC 1103 by an RRC message in step 1104. In step 1105, the RNC 1103 determines an overload bit transmission duration common to a plurality of UEs located in the soft handover region based on TTI information received from the UEs including the UE 1101.

The RNC 1103 notifies the Node B 1102 of the overload bit transmission duration by NBAP signaling in step 1106. The Node B 1102 stores the overload bit transmission duration and sets the validity duration of an overload bit to an integer multiple of the overload bit transmission duration in step 1108. The Node B 1102 belongs to an active set of the UE 1101.

In step 1107, the RNC 1103 also notifies the UE 1101 of the overload bit transmission duration by RRC signaling. The UE stores the overload bit transmission duration in step 1109 and sets the validity duration to the integer multiple of the overload bit transmission duration in step 1110.

In accordance with the exemplary embodiments of the present invention as described above, in the case where UEs located in a soft handover region receive a common scheduling grant indicating overload from a non-serving Node B, they are not allowed to increase their uplink data rates during a predetermined validity duration. Therefore, the overall efficiency of the mobile communication system may be increased.

While the present invention has been shown and described with reference to certain exemplary embodiments thereof, it will be understood by those skilled in the art that various changes in form and details may be made therein without departing from the spirit and scope of the invention as defined by the appended claims.

## Claims

1. A method of scheduling uplink data transmission in a user equipment (UE) in a mobile communication system supporting an uplink packet data service, the method comprising the steps of:
receiving, during a communication with a serving Node B and at least one non-serving Node B at a soft handover, a dedicated scheduling grant from the serving Node B by dedicated scheduling and a common scheduling grant from the at least one non-serving Node B;
controlling an uplink data rate not to exceed a previous uplink data rate during a predetermined validity duration, if the common scheduling grant indicates a rate-down; and
transmitting uplink data at the controlled uplink data rate.

2. The method of claim 1, wherein control information transmitted along with the uplink data comprises a rate request bit, and the controlling step comprises the step of setting the rate request bit to a value other than a rate-up.

3. The method of claim 1, further comprising the step of determining the validity duration according to the duration of a transmission time interval (TTI)
in which the uplink data is transmitted.

4. The method of claim 1, wherein the common scheduling grant comprises an overload bit indicating whether uplink resources of the at least one non-serving Node B are overloaded.

5. The method of claim 1, further comprising the steps of, if the common scheduling grant does not indicate a rate-down, determining the uplink data rate according to the dedicated scheduling grant and transmitting the uplink data at the determined uplink data rate.

6. The method of claim 5, wherein control information comprises a rate request bit, and the controlling step comprises the step of, if the common scheduling grant does not indicate a rate-down, setting the rate request bit according to the status of the UE.

7. The method of claim 1, further comprising the step of receiving information indicative of the validity duration from a radio network controller (RNC) that controls radio resources of the UE by radio resource control (RRC) signaling.

8. A method of scheduling uplink data transmission for a user equipment (UE) in a Node B in a mobile communication system supporting an uplink packet data service, the method comprising the steps of:
transmitting a dedicated scheduling grant to a UE located in a soft handover region by a dedicated scheduling;
receiving uplink data from the UE, after transmitting the dedicated scheduling grant;
controlling an uplink data rate not to exceed a previous uplink data rate during a predetermined validity duration, if the data rate of the received uplink data is lower than a data rate indicated by the dedicated scheduling grant; and
transmitting a dedicated scheduling grant indicating the controlled uplink data rate to the UE.

9. The method of claim 8, further comprising the step of determining the validity duration according to the duration of a transmission time interval (TTI) in which the uplink data is transmitted.

10. The method of claim 8, further comprising the step of receiving information indicative of the validity duration from a radio network controller (RNC) that controls radio resources of the UE by Node B Application Protocol (NBAP) signaling.

11. An apparatus for scheduling uplink data transmission for a user equipment (UE) in a mobile communication system supporting an uplink packet data service, the apparatus comprising:
a serving Node B and at least one non-serving Node B associated with a soft handover region; and
a UE located in the soft handover region, for receiving a dedicated scheduling grant from the serving Node B by a dedicated scheduling and a common scheduling grant from the at least one non-serving Node B, controlling an uplink data rate not to exceed a previous uplink data rate during a predetermined validity duration, if the common scheduling grant indicates a rate-down, and transmitting uplink data at the controlled uplink data rate.

12. The apparatus of claim 11, wherein control information transmitted along with the uplink data comprises a rate request bit, and the UE sets the rate request bit to a value other than a rate-up.

13. The apparatus of claim 11, wherein the validity duration is determined according to the duration of a transmission time interval (TTI) in which the uplink data is transmitted.

14. The apparatus of claim 11, wherein the common scheduling grant comprises an overload bit indicating whether uplink resources of the at least one non-serving Node B are overloaded.

15. The apparatus of claim 11, wherein if the common scheduling grant does not indicate a rate-down, the UE determines the uplink data rate according to the dedicated scheduling grant and transmits the uplink data at the determined uplink data rate.

16. The apparatus of claim 15, wherein control information comprises a rate request bit, and if the common scheduling grant does not indicate a rate-down, the UE sets the rate request bit according to the status of the UE.

17. The apparatus of claim 11, wherein the UE receives information about the validity duration from a radio network controller (RNC) that controls radio resources of the UE by radio resource control (RRC) signaling.
